# EUROPEAN PATENT APPLICATION

(11) **EP 2 127 863 A1**
(43) Date of publication of application: **02.12.2009**
(21) Application number: 08157216.6
(22) Date of filing: 29.05.2008
(51) Int. Cl.: B31B 39/00, B32B 27/32, B32B 27/36, B65D 30/08, B65D 65/40

(54) **A method of manufacturing a bag and a bag**

(71) Applicant: Hydrus B.V., 3632 EM Loenen a/d Vecht (NL)
(72) Inventor: De Muinck, Ebo Jacques, 3632 EM Loenen (NL)
(74) Representative: Metman, Karel Johannes

(57) **Abstract**

A method of manufacturing a bag (1) is performed by supplying at least two sheets (2), wherein each sheet comprises at least an inner layer (3) made of an inner layer material and an outer layer (4) made of an outer layer material. The inner layer material has a higher melting temperature than the outer layer material. The outer layers (4) of the sheets (2) are laid onto each other and welded to each other along a welding seam (5) such that an almost entirely sealed cavity (6) between the sheets arises, but leaving open an entrance opening (7) to the cavity (6). After that, the thus formed bag (1) is turned inside out through the entrance opening (7), and then a portion of the sheets (2) around the entrance opening (7) is folded inwardly of the thus formed bag (1) such that the outer layers (4) thereof face to each other and are then welded to each other such that the bag obtains a sealed cavity between the sheets (2).

## Description

The present invention relates to a method of manufacturing a bag for containing a liquid.

Manufacturing a bag for containing a liquid is known in the art. In practice, particularly plastic bags have a wall which often comprises at least two layers of different properties so as to achieve a compromise of bag properties, such as liquid permeability, flexibility, strength and the like. For certain combinations of layers a manufacturing method is not available or complex.

The present invention aims to provide an improved method of manufacturing a bag.

For this purpose the method of manufacturing a bag is performed by supplying at least two sheets, each sheet comprising at least an inner layer made of an inner layer material and an outer layer made of an outer layer material, the inner layer material having a higher melting temperature than the outer layer material, wherein the outer layers of the sheets are laid onto each other and welded to each other along a welding seam such that an almost entirely sealed cavity between the sheets arises, but leaving open an entrance opening to the cavity, after which the thus formed bag is turned inside out through the entrance opening, and then a portion of the sheets around the entrance opening is folded inwardly of the thus formed bag such that the outer layers thereof face to each other and are then welded to each other such that the bag obtains a sealed cavity between the sheets.

The advantage of this method is that a bag is obtained which has an inner layer contacting the content of the bag and having a higher melting temperature than the outer layer which is disposed at a side of the inner layer opposite to that of the inner side of the bag. This makes it possible to manufacture a bag by welding technique whereas the bag has wall layers of non-conventional combinations of materials. This broadens the number of applicable combinations.

For example, the outer layer material may be polyethylene (PE) and the inner layer material may be polyethylene terephtalate (PET). PET has a higher melting temperature than PE. When welding two sheets, which each comprise a PET layer and a PE layer, and welding the PET layers to each other the PE layer may be damaged due to the relatively high melting temperature of PET. When welding the PE layers of the sheets to each other the PET layers will not be damaged due to the relatively low melting temperature of PE. However, from point of manufacturing efficiency it is desired to be able to manufacture a bag having welded seals and a PET layer as inner layer. The advantage of a bag having PE as outer layer and PET as inner layer is that, when the bag is filled with a liquid, the inner layer contacts the liquid, but has relatively little influence on the taste of the liquid, since PE has a high tendency to modify the taste of the liquid, but PET has not. For example, because of the neutral taste of water it is very sensitive to a little change in taste, for example due to storage of water in a bag having a PE inner layer. This may be caused by chemical compounds such as plasticizers or additives present in PE and migrating to water upon contact therewith. Furthermore, the method according to the invention is also suitable for manufacturing bags which have alternative inner and outer layers, for example an inner layer which is acid resistant such that acids can be transported in bags. It is noted that welding can be done according to a conventional method, for example by clamping the sheets between heated welding bars.

In an alternative method a bag is manufactured by supplying at least two sheets, each comprising at least an inner layer made of an inner layer material and an outer layer made of an outer layer material, the inner layer material having a higher melting temperature than the outer layer material, wherein the outer layers of the sheets are laid onto each other and welded to each other along a welding seam such that an almost entirely sealed cavity between the sheets arises, but leaving open an entrance opening to the cavity, and wherein the inner and outer layers of the sheets at the entrance opening are manufactured such that the outer layers extend beyond outer edges of the respective inner layers as seen in outward direction of the sheets, wherein the thus formed bag is turned inside out through the entrance opening, and then said portions of the outer layer extending beyond the inner layer are welded to each other. In this case the outer layers at the entrance opening face to each other and can be welded to each other rather easily. Thus, the inner layers are not or not entirely present between the welded portions of the outer layers. It does not matter at what stage in the method the inner and outer layer are manufactured such that the outer layer extends beyond the inner layer, as long as it is performed before welding the outer layers to each other.

In another alternative method the bag is manufactured by supplying at least two sheets, each sheet comprising at least an inner layer made of an inner layer material and an outer layer made of an outer layer material, the inner layer material having a higher melting temperature than the outer layer material, wherein the inner layers of the sheets are laid onto each other, and wherein the inner layer and outer layer are prepared such that the inner layer is away at a location where a welding seam of the sheets is intended, and the outer layers are welded to each other at the location where a welding seam is intended. In this case the inner layers may extend up to the welding seam such that a contact of the content of the bag with the outer layer is minimized. However, little contact between the outer layer and the content of the bag may be acceptable. It is noted that at the location where the inner layer is away, the inner layer is not laminated or adhered to the outer layer or removed from the outer layer or the like. It is also possible that the inner layer and outer layer are not fixed to each other and that the surface of the inner layer is just smaller than the surface of the outer layer.

The welding seam may be circumferentially shaped such that a sealed cavity arises between said sheets.

In still another alternative method the sheets are supplied and laid onto each other by supplying a main sheet being continuous in a transfer direction and having longitudinal welding portions spaced from each other in a direction perpendicular to the transfer direction, in which welding portions the inner layer is away, and folding and cutting the main sheet such that the inner layer of the main sheet and the welding portions are laid onto themselves, and the outer layer at the welding portions face to each other, and the outer layer at the welding portions are welded to each other, thus forming a cavity surrounded by sheets comprising welded welding portions and a fold, the thus formed bag leaving open an entrance opening to the cavity, and then a portion of the sheets around the entrance opening is folded inwardly of the thus formed bag such that the outer layers thereof face to each other and are then welded to each other such that the bag obtains a sealed cavity between the sheets. The advantage of this embodiment is that the bag does not need to be turned inside out. Of course, the cavity may still communicate to the environment via a valve opening, for example.

The invention is also related to a bag, which is manufactured by a method as described hereinbefore. The bag may be suitable for containing liquid or alternative substances such as solids.

The invention is also related to a bag having a wall which comprises at least an inner layer facing the inner side of the bag and an outer layer being disposed at a side of the inner layer opposite to the inner side of the bag, wherein the inner layer has a higher melting temperature than the outer layer. Furthermore, the inner layer and/or outer layer may be a polymer. These materials are relatively cheap and can be given a great variety of suitable properties, for example by adding additives to the base materials or modifying the molecule structure. Preferably the inner layer is of polyethylene terephtalate (PET) and/or the outer layer is of polyethylene (PE).

The invention is also related to a bag for containing a liquid having a wall which comprises at least an inner layer facing the inner side of the bag and an outer layer being disposed at a side of the inner layer opposite to the inner side of the bag, which are made of such an inner layer material and an outer layer material, respectively, that upon contact of said materials with a liquid, migration of chemical compounds contained in the inner layer material thereby influencing the human taste of the liquid is lower than that of the outer layer material. Due to these features the conservation of the quality of a content of the bag is improved. Preferably, the inner layer material is polyethylene terephtalate (PET) and/or the outer layer is polyethylene (PE) since these materials have well-known properties and are widely available. As described hereinbefore such a bag can be manufactured according to the method according to the invention.

As a consequence of applying an inner layer having a relatively little tendency to influence the taste of water the original taste can be maintained and longer storage periods are possible. In practice, polyethylene terephtalate (PET) appears to have such properties, but making a flexible and strong bag of PET only is not possible. Therefore, a relatively thin layer of PET combined with a relatively thick layer of a more flexible material like polyethylene can be applied, for example by laminating both layers. A difference in the level of human taste between the application of inner layer material and outer layer material may be determined by a panel of test persons. However, for a lot of materials such as polymers like PE and PET, the difference in tendency of influencing the taste of mineral water, for example, contained therein is known. Another way of selecting the inner and outer layer materials is possible by measurement of taste-modifying chemical components in a liquid which is in contact with the inner or outer layer material.

It is noted that the chemical compounds influencing the taste may comprise a plasticizer, but other compounds having taste-influencing properties are conceivable.

In this document polyethylene (PE) and polyethylene terephtalate (PET) are mentioned several times. These material types cover a range of chemical materials having different properties of taste-influencing compounds and melting temperature as defined hereinbefore. Alternative materials for the inner layer are conceivable, such as TFE/TPFE (Teflon™), PPS (Polyphenylene Sulfide), ECTFE (Halar), PA (Polyamide or Nylon), OPA (oriented polyamide), PC (polycarbonate or Lexan), PP (polypropylene), PFA (perfluor-alkoxy-polymers), POM (polyoxymethylene). These materials may have certain characteristics such as anti-adhesive or acid-resistant properties. Because of economical or technical reasons it is not reasonable to manufacture an entire bag of these materials; therefore these materials are used as an inner layer together with an outer layer, such as PE.

The inner layer and the outer layer may be fixed to each other over substantially the entire surfaces thereof. This may be achieved by welding, gluing or alternative adhering means. The layers may also be separated, for example in case of relatively big bags.

In practice, the bag walls will be made of a material which is flexible and liquid impermeable. The inner layer may be thinner and have a higher density than the outer layer. The bag may be entirely sealed having a sealable opening for filling and/or emptying the bag. In a starting condition of the bag, i.e. the bag is empty, it may be vacuum.

The invention will hereafter be elucidated with reference to the very schematic drawings showing embodiments of the invention by way of example.
Fig. 1a is a plan view of a bag in an intermediate condition during an embodiment of the manufacturing method according to the invention.
Fig. 1b is a cross-sectional view along the line Ib-Ib in Fig. 1a.
Fig. 1c is a similar view as Fig. 1b along the line Ic-Ic in Fig. 1a.
Fig. 1d is a similar view as Fig. 1c, but illustrating a next step in the manufacturing method.
Fig. 1e is a similar view as Fig. 1c, illustrating a next step after that according to Fig. 1d.
Fig. 2a and 2b are a plan view and a cross-sectional view, respectively, of a bag which is manufactured according to an alternative method.
Fig. 3a-3e are similar views as Fig. 1a-1e, illustrating an alternative embodiment of the manufacturing method.
Fig. 4a-4c are similar views as Fig. 1a-1c, illustrating another alternative embodiment of the manufacturing method.
Fig. 5a is a plan view of another alternative embodiment of the manufacturing method, Fig. 5b is a plan view of the bag in an intermediate condition in this method, and Fig. 5c-d are cross-sectional views along the line Vcd-Vcd in Fig. 5b at different steps in the method.
Fig. 6a is a cross-sectional view of two sheets before welding and Fig. 6b is a similar view in welded condition.

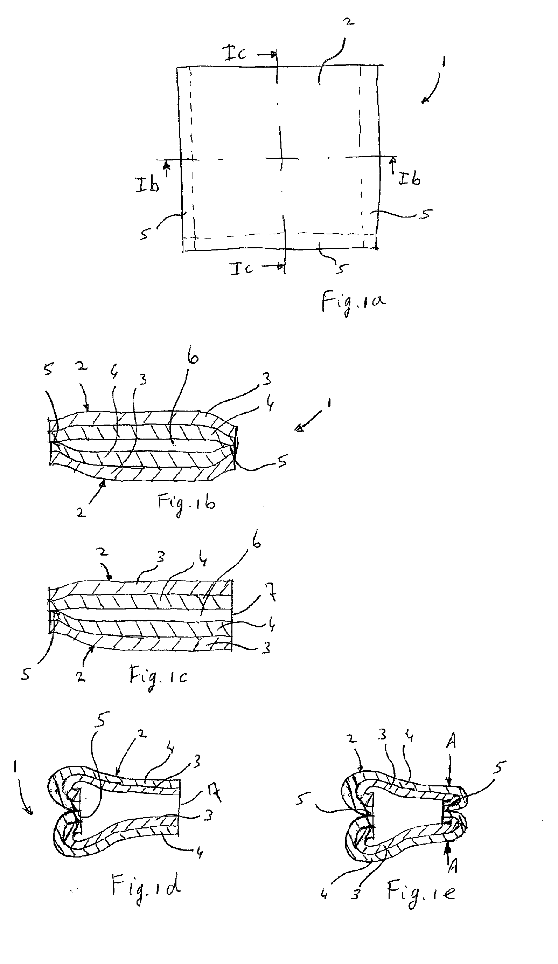

The accompanying figures illustrate several examples of a method of manufacturing a bag 1, in this case a plastic bag. The bag 1 according to the invention is not limited to a certain size and may vary from small bags to large bags for bag-in-box combinations, for example. Basically, the bag 1 is intended for use in transportation of liquids in the food industry, but alternative goals are conceivable, for example bags for containing an acid liquid or bags for solid materials or granulates. The bag 1 has a wall or sheet 2 which comprises at least an inner layer 3 made of an inner layer material and an outer layer 4 made of an outer layer material. When the bag 1 is filled with a liquid the inner layer 3 faces the liquid and is in contact with the liquid (see Fig. 1e, 2b, 3e, 4c, 5d). The inner and outer materials are such that the inner and outer layer are flexible.

Nowadays plastic bags are often made of a polymer such as polyethylene (PE). Since the bag 1 according to the invention is inter alia intended for transportation of food products, PE as an inner layer 3 is undesired because it is known that PE releases chemical compounds such as plasticizers to a liquid, influencing the taste thereof, upon being in contact with the liquid. Therefore, the characteristics of the inner and outer layer material may be such that upon contact with a liquid, migration of chemical compounds contained in the inner layer material thereby influencing the human taste of the liquid is lower than that of the outer layer material. Typical chemical compounds which influence the taste of a liquid are plasticizers or other additives, but other compounds may cause similar effects. Further chemical components may be intermediate reaction products or residual monomers or fatty acids and the like.

In the bag 1 as shown in the accompanying figures the outer layer material is PE and the inner layer is polyethylene terephtalate (PET). PET is a known polymer which has a low tendency to influence the taste of a liquid upon being in contact therewith. Bottles for beverages are often made of PET. PET is also applicable as a thin layer on PE, for example, in order to create a flexible sheet containing PET. If the entire bag 1 would be made of PET the bag would be less flexible. In case of bags, in practice it is desired to weld such sheets of PE/PET to each other at increased temperature. When laying two sheets of PE/PET onto each other and the PET-sides are facing to each other, and applying the welding temperature of PET upon the outer side of the sheets, the PE layers at the outer sides of the sheets would be damaged because PE has a lower melting temperature than PET. In the other way around, when laying two sheets of PE/PET onto each other and the PE-sides are facing to each other, applying the welding temperature of PE would be sufficient to weld the sheets to each other without damaging the PET layer. However, a bag having a PE layer on its inner side may be undesired in case of containing food products as explained hereinbefore.

Fig. 1 illustrates an example of the manufacturing method of a plastic bag 1 according to the invention. Fig. 1a shows an intermediate condition of the bag 1 and Fig. 1b and 1c show cross-sectional views in longitudinal and lateral direction of the bag 1 in this condition, respectively. Although not shown in Fig. 1, the bag 1 is provided with at least an opening for filling and/or emptying the bag 1. The opening may be sealable, for example a valve. The condition as shown in Fig. 1a-1c is obtained by laying two rectangular sheets, each comprising the inner layer 3 and the outer layer 4, onto each other. In this case the inner layer material is PET and the outer layer material is PE. The outer layers of PE are facing to each other and are welded to each other along welding seams 5. A portion of the sheets is not welded, but left open forming an entrance opening 7, such that a cross-sectional shape as shown in Fig. 1c arises. Thus, the sheets 2 form a cavity 6 surrounded by welding seams 5, which cavity 6 communicates with the environment via the entrance opening 7, see Fig. 1c. In this conditions the outer layers 4 still face to the inner side or cavity 6 of the bag 1.

In a next step the thus formed bag 1 is turned inside out through the entrance opening 7 such that the bag 1 as shown in Fig. 1d is obtained. The existing welding seams 5 are maintained and the bag now comprises an inner layer 3 of PET facing to the inner side of the bag 1, and an outer layer 4 of PE facing outwardly from the bag 1.

In the next step the entrance opening 7 of the bag 1 is sealed. Since in this case the inner layers 3 are made of PET they cannot be welded at increased temperature to each other without damaging the outer layer 4 of PE, because the welding temperature of PET is higher than that of PE. Therefore, a portion of the sheets 2 around the entrance opening 7 is folded inwardly of the bag 1 such that the outer layers 4 of the sheets 2 face to each other, and then the outer layers 4 near the entrance opening 7 are welded to each other. This is shown in Fig. 1e by arrows A illustrating the location where welding bars are pressed onto the sheets 2, thus creating a welding seam 5 between the adjacent outer layers 4.

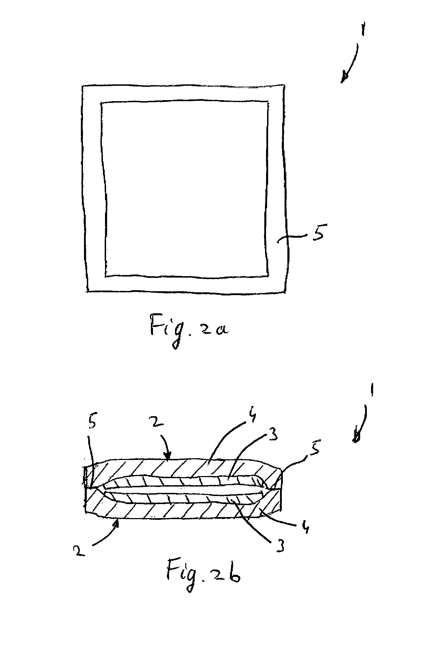

Fig. 2a-2b show an alternative embodiment of a bag 1 which is manufactured according to an alternative method. In this embodiment the bag 1 has an outer layer 4 of PE and an inner layer 3 of PET. As can been seen in Fig. 2a-2b the outer layer 4 has a larger surface than the inner layer 3. The outer layer 4 extends beyond the outer edge of the inner layer 3 as seen in outward direction of the bag 1. The welding seams 5 are applied along the outer edges of the outer layer 4 in which areas the outer layers 4 of the sheets 2 face to each other without the inner layers 3 being sandwiched between the outer layers 4. Preferably, the inner layers 3 are cut such that their outer edges closely extend along the welding seams 5. However, a small distance between the outer edge of the inner layers 3 and the welding seams 5 may be acceptable since a contact surface of a portion of the outer layers 4 which is not covered by the inner layer 3 with the content of the bag 1, when filled, is relatively small. The effect of the release of chemical compounds from the outer layer 4 to a liquid in the bag 1 will be limited in this case, for example.

It may be clear that the method as illustrated in Fig. 2a-2b may be modified in that the sheets 2 are not two separated sheets 2 laid onto each other, but that it is a single sheet which is folded, thus laying two sheet portions onto each other. In this case, one of the welding seams 5 is replaced by a fold.

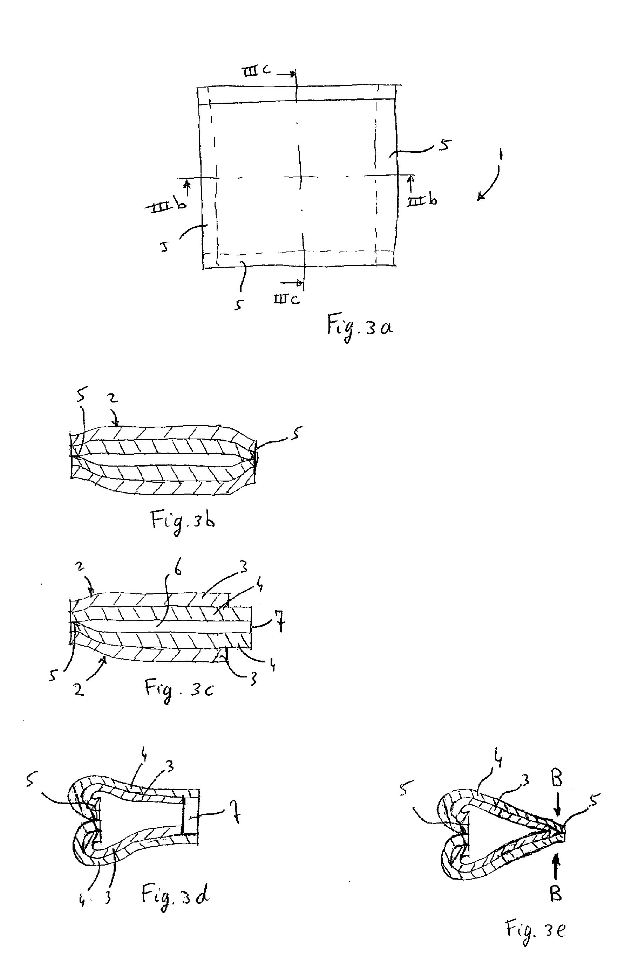

Fig. 3a-3e illustrate another alternative method of manufacturing the bag 1 according to the invention. In this embodiment, the sheets 2 are welded along three adjacent welding seams 5 leaving open a portion, comparable to the method as illustrated in Fig. 1a-1e. In this embodiment the inner layers 3 of the sheets 2 at the entrance opening 7 are manufactured such that the outer layers 4 extend beyond outer edges of the inner layers 3 as seen in outward direction of the sheets 2. This condition is shown in Fig. 3c. Then, the thus formed bag 1 is turned inside out through the entrance opening 7, leading to the condition as shown in Fig. 3d. Now, at the entrance opening 7 the outer layers 4 extend beyond the outer edges of the inner layers 3 as seen outwardly from the bag 1. Then, the portions of the outer layer 4 extending beyond the edges of the inner layer 3 are welded to each other at an edge area as indicated by arrows B in Fig. 3e, resulting in the welding seam 5.

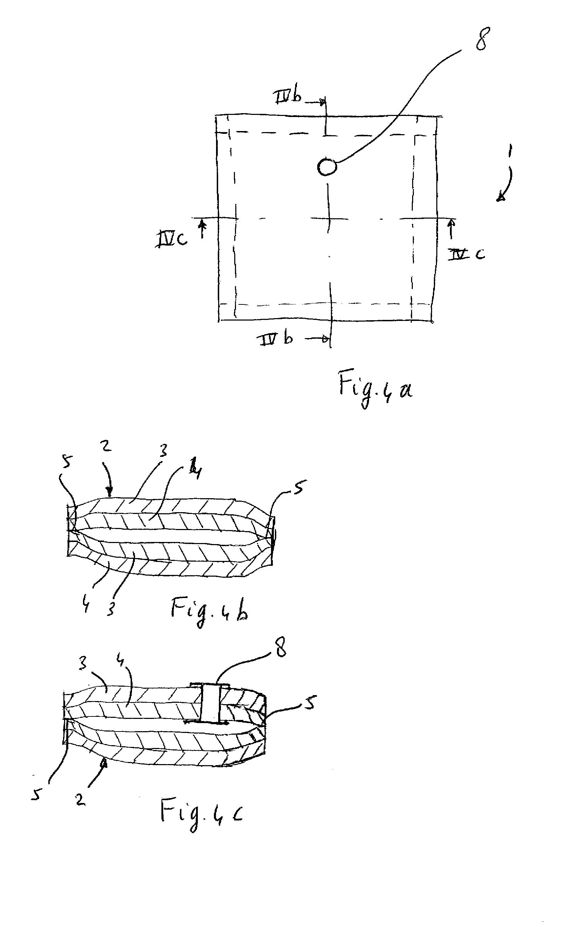

In Fig. 4a-4c a bag 1 provided with a filling duct 8 is shown. The sheets 2 are welded along four welding seams 5 forming a continuous circumferential welding seam. In order to create a bag 1 having an inner layer 3 facing to the inner side of the bag 1 the sheets 2 are drawn through the filling duct 8 (not shown).

It is noted that the bag 1 of all embodiments as described above may comprise at least an opening for filling or emptying the bag 1. A filling duct 8 may be of a material which has a relative high tendency to migrate chemical compounds to a liquid contained in the bag 1, like PE as explained hereinbefore. Therefore, the filling duct 8 may be fixed to the outer layer 4 only, for example, such that a contact surface of the filling duct with the liquid in the bag 1 is minimized. Alternatively, if the filling duct includes a flange which is adhered to the inner layer 3 and faces to the inner side of the bag, for example, the flange can be covered by a sheet having a low tendency to migrate chemical compounds to a liquid upon contact therewith.

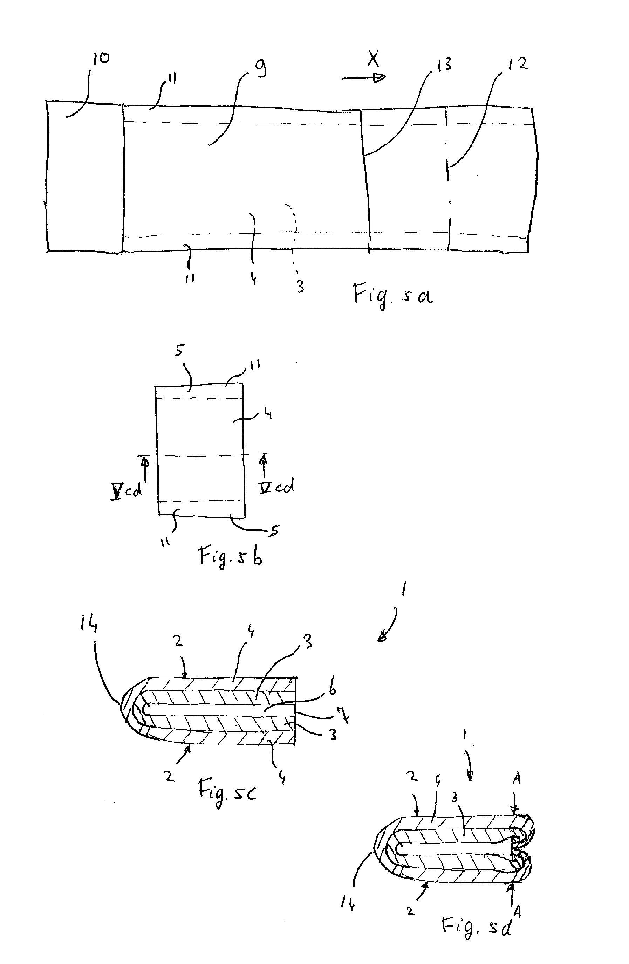

Fig. 5 shows an alternative method of manufacturing a bag wherein the sheets 2 are supplied and laid onto each other by supplying a main sheet 9. The main sheet 9 is supplied from a roll 10 and is a continuous sheet in a transfer direction X. The main sheet 9 has longitudinal welding portions 11 which are spaced from each other in a direction perpendicular to the transfer direction X. In this case the welding portions 11 are located at opposite edge portions in lateral direction of the main sheet 9. At the welding portions 11 the inner layer 3 is away, comparable to the condition as shown in Fig. 3d. Therefore, the welding portions 11 are ready for being welded when laid onto each other.

Furthermore, in this method the main sheet 9 is folded along a folding line 12 and cut along a cutting line 13, see Fig. 5a. The inner layer 3 of the main sheet 1 including the welding portions 11 is laid onto itself such that the outer layer 4 at the welding portions 11 face to itself, see Fig. 5b. The outer layers 4 at the welding portions 11 are welded to each other, thus forming a cavity 6 surrounded by sheets 2 comprising welded welding portions or welding seams 5 and a fold 14. This condition is illustrated in Fig. 5c and the thus formed bag 1 has still an entrance opening 7 to the cavity 6. The entrance opening 7 is sealed according to the method as illustrated in Fig. 1 and described hereinbefore. A cross section of the bag 1 after manufacturing is illustrated in Fig. 5d. Thus, in this embodiment the main sheet 9 at the beginning of the manufacturing method becomes the opposed sheets 2 of the bag 1 at the end of the manufacturing method. In this method the bag 1 does not need to be turned inside out.

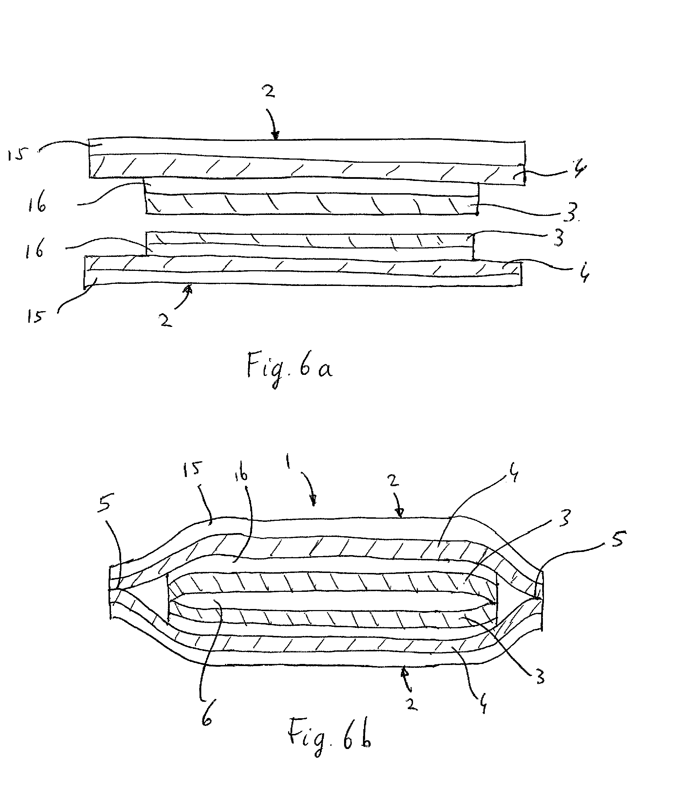

The walls or sheets 2 may have more layers than the inner and outer layer 3, 4. This is illustrated in the embodiment of Fig. 6. In Fig. 6a two sheets 2 are shown in a condition before welding. This embodiment is comparable to that shown in Fig. 2, but in this case each sheet 2 comprises a first and second further layer 15 and 16. The first further layer 15 is made of PET for example, in order to obtain a bag 1 having an outer side of PET, and the second further layer 16 is made of PE for example. Such a sheet 2 on itself may be made of laminating two PE/PET layers onto each other, for example. If the outer layer 4 is made of PE and the second further layer 16 is made of PE the two PE/PET layers can be easily welded to each other. Fig. 6b shows the condition in which the sheets 2 are welded to each other by a method according to the invention, comparable to that of Fig. 2. The inner layers 3 of the sheets 2 are laid onto each other. The inner layer 3 and outer layer 4 of each sheet 2 are prepared such that the inner layer 3 is away at a location where a welding seam 5 of the sheets 2 is intended. In this case the outer layer 4 of each sheet 2 extends beyond an outer edge of the inner layer 3 of that sheet as seen in outward direction along the sheet 2. In other words, in this case the surface of the outer layer 4 is larger than that of the inner layer 3. The sheets 2 are welded to each other at locations where the outer layer 4 extends beyond the inner layer 3, as illustrated by welding seams 5 in Fig. 6b. As a consequence, a bag 1 is obtained which has a wall 2 which comprises an inner layer 3 facing the inner side or cavity 6 of the bag 1 and an outer layer 4 which is disposed at a side of the inner layer 3 opposite to the inner side of the bag 1, whereas the wall 2 further comprises a first further layer 15 and a second further layer 16.

From the foregoing, it will be clear that the invention provides a method of manufacturing a bag by applying welding technique, wherein the bag has an inner layer of higher melting temperature than the outer layer.

The invention is not limited to the embodiments shown in the drawings and described hereinbefore, which may be varied in different manners within the scope of the claims and their technical equivalents. For example, the shape of the bag may be different from a rectangular shape. The walls or sheets may be a combination of a polymer and another material such as a vaporized metal, for example. PE may be replaced by other polymers giving a suitable strength and flexibility, such as PVC, PP. PET may be replaced by materials like PA, OPA, PC, PP, POM, or the like. It is for example possible to have combinations of inner layer and outer layer like PET and PE, PET and PP, or PP and PE, respectively. In these combinations the inner layer has a higher melting temperature than the outer layer. The advantages of PE and PET are the low prices thereof. The inner layer 3 and the outer layer 4 may be fixed to each other over the entire surfaces thereof, but it is also possible that they are separate layers or part of separate layers, which is typically advantageous in case of relatively big bags.

## Claims

1. Method of manufacturing a bag (1) by supplying at least two sheets (2), each sheet comprising at least an inner layer (3) made of an inner layer material and an outer layer (4) made of an outer layer material, the inner layer material having a higher melting temperature than the outer layer material, wherein the outer layers (4) of the sheets (2) are laid onto each other and welded to each other along a welding seam (5) such that an almost entirely sealed cavity (6) between the sheets arises, but leaving open an entrance opening (7) to the cavity (6), after which the thus formed bag (1) is turned inside out through the entrance opening (7), and then a portion of the sheets (2) around the entrance opening (7) is folded inwardly of the thus formed bag (1) such that the outer layers (4) thereof face to each other and are then welded to each other such that the bag obtains a sealed cavity between the bags.

2. Method of manufacturing a bag (1) by supplying at least two sheets (2), each comprising at least an inner layer (3) made of an inner layer material and an outer layer (4) made of an outer layer material, the inner layer material having a higher melting temperature than the outer layer material, wherein the outer layers (4) of the sheets (2) are laid onto each other and welded to each other along a welding seam (5) such that an almost entirely sealed cavity (6) between the sheets (2) arises, but leaving open an entrance opening (7) to the cavity (6), and wherein the inner and outer layers (3, 4) of the sheets (2) at the open portion (7) are manufactured such that the outer layers extend beyond inner edges of the respective outer layers (4) as seen in outward direction of the sheets (2), wherein the thus formed bag (1) is turned inside out through the entrance opening (7), and then said portions of the outer layer (4) extending beyond the inner layer (3) are welded to each other.

3. Method of manufacturing a bag (1) by supplying at least two sheets (2), each sheet (2) comprising at least an inner layer (3) made of an inner layer material and an outer layer (4) made of an outer layer material, the inner layer material having a higher melting temperature than the outer layer material, wherein the inner layers (3) of the sheets (2) are laid onto each other, and wherein the inner layer (3) and outer layer (4) are prepared such that the inner layer (3) is away at a location where a welding seam (5) of the sheets is intended, and the outer layers (4) are welded to each other at the location where a welding seam (5) is intended.

4. Method according to claim 3, wherein the welding seam (5) is circumferentially shaped such that a sealed cavity (6) arises between said sheets (2).

5. Method according to claim 3, wherein the sheets are supplied and laid onto each other by supplying a main sheet (9) being continuous in a transfer direction (A) and having longitudinal welding portions (11) spaced from each other in a direction perpendicular to the transfer direction (A), in which welding portions (11) the inner layer (3) is away, and folding and cutting the main sheet (9) such that the inner layer (3) of the main sheet (9) and the welding portions (11) are laid onto themselves, and the outer layer (4) at the welding portions (11) face to each other, and the outer layer (4) at the welding portions (11) are welded to each other, thus forming a cavity (6) surrounded by sheets (2) comprising welded welding portions (11) and a fold (14), the thus formed bag (1) leaving open an entrance opening (7) to the cavity (6), and then a portion of the sheets (2) around the entrance opening (7) is folded inwardly of the thus formed bag (1) such that the outer layers (4) thereof face to each other and are then welded to each other such that the bag (1) obtains a sealed cavity (6) between the sheets (2).

6. A bag (1) which is manufactured by a method according to one of the preceding claims.

7. A bag (1) having a wall (2) which comprises at least an inner layer (3) facing the inner side of the bag and an outer layer (4) being disposed at a side of the inner layer (3) opposite to the inner side of the bag (1), wherein the inner layer (3) has a higher melting temperature than the outer layer (4).

8. A bag (1) according to claim 7, wherein the inner layer (3) and/or outer layer (4) is a polymer.

9. A bag (1) according to one of the claims 6-8, wherein the inner layer (3) is made of polyethylene terephtalate (PET) and/or the outer layer (4) is made of polyethylene (PE).

10. A bag (1) having a wall (2) which comprises at least an inner layer (3) facing the inner side of the bag (1) and an outer layer (4) being disposed at a side of the inner layer (3) opposite to the inner side of the bag (1), which are made of such an inner layer material and an outer layer material, respectively, that upon contact of said materials with a liquid, migration of chemical compounds contained in the inner layer material thereby influencing the human taste of the liquid is lower than that of the outer layer material.

11. A bag according to claim 10, wherein the inner layer material is polyethylene terephtalate (PET) and/or the outer layer material is polyethylene (PE).
